Europäisches Patentamt

(19) European Patent Office

Office européen des brevets

(11) Veröffentlichungsnummer: **0 045 056**
**B1**

(12) **EUROPÄISCHE PATENTSCHRIFT**

(45) Veröffentlichungstag der Patentschrift:
11.06.86

(21) Anmeldenummer: 81105799.1

(22) Anmeldetag: 22.07.81

(51) Int. Cl.⁴: **G 01 D 7/08**, G 01 B 17/02,
**G 01 B 7/06**

(54) Überwachungseinrichtung für den Herstellungsvorgang von Bleikabeln.

(30) Priorität: 23.07.80 AT 3812/80

(43) Veröffentlichungstag der Anmeldung:
03.02.82 Patentblatt 82/5

(45) Bekanntmachung des Hinweises auf die Patenterteilung:
11.06.86 Patentblatt 86/24

(84) Benannte Vertragsstaaten:
AT CH FR GB IT LI

(56) Entgegenhaltungen:
GB - A - 1 136 506
GB - A - 1 145 981
US - A - 2 111 210
US - A - 3 901 071

FEINWERKTECHNIK & MESSTECHNIK, Band 86, Nr. 6,
August/September 1978, Seiten 260-262, München, DE.
M. BECKER et al.: "Modernes Messen und Überwachen
mit dem Bildschirmgerät "Datascope 2002"

(73) Patentinhaber: WIENER KABEL- UND METALLWERKE
Gesellschaft m.b.H., Siemensstrasse 88, A-1210 Wien
(AT)

(72) Erfinder: Frankl, Klaus, Schreiberweg 76, A-1190 Wien
(AT)

(74) Vertreter: Faber, Robert, Dr., Wiener Kabel- und
Metallwerke Ges.m.b.H. Patente und Verträge
Siemensstrasse 88-92 Bau 33, A-1210 Wien (AT)

## Beschreibung

Die Erfindung betrifft eine Einrichtung gemäß dem Oberbegriff des Patentanspruches.

Bei der Herstellung von Kabeln mit Bleiummantelung ist neben anderen der Wanddicke des auf das fertigverseilte Kabel aufgebrachten Bleimantels von Seiten des Bedienungspersonals besondere Aufmerksamkeit zuzuwenden. Die genaue Einhaltung der zulässigen Untergrenze der Dicke des Bleimantels im Bereich einer Größenordnung von hundertstel Millimeter bringt bereits beachtliche Bleiersparnisse, die im Rahmen der derzeitigen Arbeitsbedingungen eine Senkung des Mehrverbrauches gegenüber dem theoretischen Minimum auf mindestens die Hälfte ermöglicht.

Es ist daher sehr wesentlich, durch entsprechende Hilfsmittel dem Bedienungspersonal in jeder Phase des Herstellungsvorganges auf zwingende Weise die Abweichungen von möglichen Minimalwert einerseits sowie die Symmetrie des Bleimantels in Bezug auf die Kabelseele und andere, für die Kosten des Verfahrens wesentliche Prozeßparameter sichtbar vor Augen zu führen. Daher soll die Anzeige der Verfahrensergebnisse in besonders suggestiver optischer Form unmittelbar am Arbeitsplatz des Bedienungspersonals erfolgen.

Aus der US-A-2 111 210 ist es bekannt, am Umfang des Kabelmantels verteilte Meßwertgeber für die Wandstärke des Bleimantels vorzusehen, wobei durch eine Mehrzahl von Spulen im zu vermessenden Material Wirbelströme erzeugt werden, deren Stärke u.a. eine Funktion der Metalldicke ist.

Als Meßwertgeber für die Bestimmung der Wandstärke von Rohren sieht die US-A-3 901 071 Ultraschall-Echosonden mit nachgeschalteten Spannungsverstärkern vor, wobei diese Sonden in einer Ebene senkrecht zur Längserstreckung des Bleimantels am Umfang des Bleimantels, um 90° gegeneinander versetzt, angeordnet sind.

Durch die GB-A-1 145 981 wird erkennbar, daß eine aufeinanderfolgende Abfrage der Signalausgänge von dreidimensional angeordneten Meßwertgebern, z.B. der Echosonden, wenn sie in geeigneter Weise am Schirm eines Sichtgerätes optisch dargestellt wird, bereits unmittelbar einen zwingenden dreidimensionalen Eindruck vermitteln kann. Darüber hinaus ist aus "Feinwerktechnik & Meßtechnik, Jahrg. 86, Nr. 6, 1978, Seiten 260-262" eine Anordnung bekannt, bei der die parallel anliegenden Meßwerte durch einen Multiplexer in serielle Signale umgesetzt werden, die auf einem Monitor gleichzeitig als Balken dargestellt werden. Für jeden Meßkanal sind zwei Grenzwerte programmierbar, bei deren Überschreitung sich die Farbe der Balken ändert.

Bei der Ausführung einer Einrichtung nach der Summe der vorbekannten Merkmale stellt sich das Bildsignal als eine Reihe im wesentlichen am linken Rand des Bildschirms beginnender vertikaler Farbsäulen dar, die ihre Stellung im Verlauf des Ablaufes des Kabels nicht verändern und den jeweils unter den Sonden befindlichen Abschnitt des Bleimantels darstellen. Diese Methodik allein würde jedoch eine entsprechend deutliche Darstellung der Verhältnisse nicht ausreichend zwangsläufig zulassen, sie würde lediglich ein nebeneinander angeordnetes, an sich wohl aussagekräftiges, jedoch nicht genügend sinnfälliges Bild in Form von Farbsäulen ergeben.

Aufgabe der Erfindung ist es, die Aussagekraft des Bildsignals sowohl bezüglich des Auftretens zeitlicher Meßwertänderungen alleine als auch bezüglich der damit im Zusammenhang stehenden Abweichungen von den optimalen Verfahrensparametern wesentlich zu erhöhen. Diese Aufgabe wird durch eine Einrichtung mit den im Patentanspruch genannten Merkmalen gelöst.

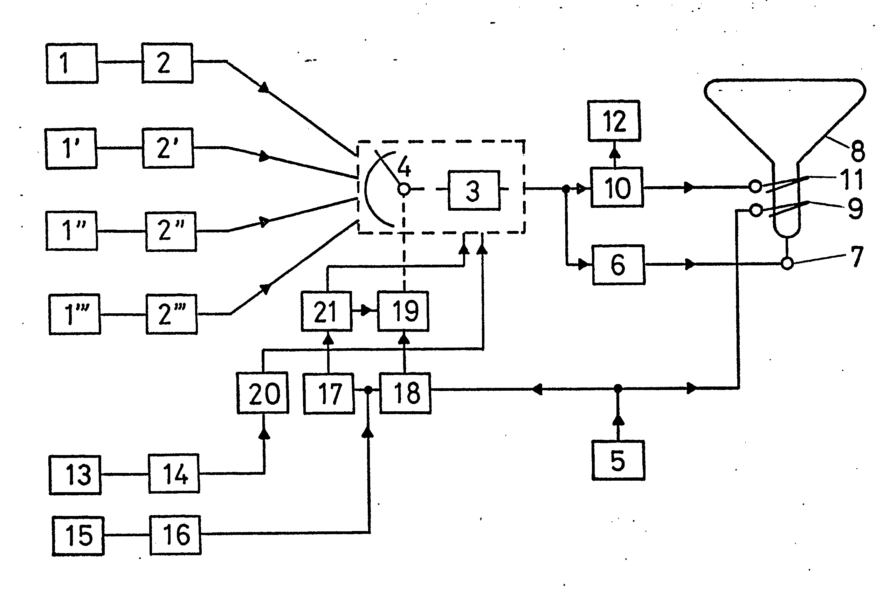

Die durch die Erfindung erreichten Vorteile sind im wesentlichen darin zu sehen, daß jedem Punkt des Kabels eine Gruppe von Zeichen für die Dicke des Bleimantels zugeordnet ist und diese Zeichengruppe, dem Ablauf des Kabels entsprechend, über den Bildschirm wandert, sodaß nicht nur der Augenblickswert sondern auch der unmittelbar vorhergehende Wert der Wandstärken sichtbar bleibt, wobei durch geeignete Wahl der Breite der Vertikalstreifen und der Abbildung der Kabelgeschwindigkeit auf die Wandergeschwindigkeit der Farbstreifen über den Bildschirm verschiedene Verfahrensweisen in einfacher Weise deutlich gemacht werden können. Darüberhinaus kann dem Bedienungspersonal zu jedem Zeitpunkt zur Kenntnis gebracht werden, ob in optimaler Weise verfahren wurde.

Zur weiteren Verdeutlichung des Erfindungsgedankens ist eine erfindungsgemäße Ausführungsform einer Überwachungseinrichtung in der Zeichnung dargestellt.

Die Ultraschall-Echosonden 1, 1', 1" und 1"' sind über die zugeordneten Spannungsverstärker 2, 2', 2" und 2"' an die Eingänge der Auswerteeinheit 3,4 geführt, in welcher ein Bildsignalgenerator 3 sowie ein Wahlschalter 4 angeordnet ist, der von der Zeilenablenkspannungseinheit 5 des Farbbildgebers 8 esteuert wird. Der Ausgang der Auswerteeinheit 3,4 ist über einen ersten Spannungsdiskriminator 6 mit dem Farbsteuereingang 7 des Farbbildgebers 8 verbunden, dessen Zeilenablenkung von der Zeilenablenkspannungseinheit 5 über die Ablenkspule 9 erfolgt. Der Ausgang des Bildsignalgenerators 3 ist überdies über einen zweiten Spannungsdiskriminator mit der Vertikalablenkspule 11 des Farbbildgebers 8 verbunden, wobei das Ausgangssignal den zweiten Spannungsdiskriminator 10 ungehindert passiert und lediglich beim Überschreiten oder Unterschreiten eines vorgegebenen Grenzwertes durch die Alarmeinheit 12 ein akustisches Warnsignal abgegeben wird. Ein erster Meßwertgeber 13 für den Bleivorrat in Verbindung mit einem esten Spannungsverstärker 14 ist über eine erste Einblendschaltung 20 mit dem Bildsignalgenerator 3 der Auswerteeinheit 3,4 verbunden.

Ein zweiter Meßwertgeber 15 für die gefertigte Kabellänge in Verbindung mit einem zweiter Spannungsverstärker 16 ist über eine Recheneinheit 17, in der das Produkt aus gefertigter Kabellänge und Sollwert des Bleiverbrauchs je Meter Kabellänge gebildet wird, sowie über eine zweite Einblendschaltung 21 ebenfalls mit dem Bildsignalgenerator 3 sowie mit einem weiteren Eingang der Zeitmultiplexschaltung 19 verbunden.

**Patentanspruch**

1. Überwachungseinrichtung für den Herstellungsvorgang von Bleikabeln mit am Umfang des Bleimantels in einer Ebene senkrecht zu dessen Längserstreckung angeordneten Ultraschallsonden (1,1',1'',1''), die mit zugeordneten Eingängen einer Auswerteeinheit (3,4) verbunden sind, wobei diese Eingänge durch einen, von der Zeilenablenkspannung eines am Arbeitsplatz angeordneten Farbbildgebers (8) gesteuerten Wahlschalter (4) im Zeitmultiplex abgefragt werden und die am Ausgang des Wahlschalters (4) auftretende, jeweils einer Sonde zugeordnete Spannung sowohl die Vertikalablenkung des Farbbildgebers (8) steuert als auch dem Eingang eines zweischrankigen ersten Spannungsdiskriminators (6) zugeführt ist, dessen unterer und oberer Spannungsschrankenausgang mit einem Farbsteuereingang (7) des Farbbildgebers (8) steuernd verbunden ist, dadurch gekennzeichnet, daß Meßwert ber (15,13) für die erzeugte Kabellänge und die dieser zugeordneten Bleimenge vorhanden sind, daß der Ausgang des zweiten Meßwertgebers (15) für die erzeugte Kabellänge in einer Addierschaltung (18) mit der Zeilenablenkspannung verknüpft und einer Zeitmultiplexschaltung (19) als weiteres Signal zugeführt ist und daß der erste Meßwertgeber (13) für den Bleivorrat über eine erste Einblendschaltung (20) über einen Bildsignalgenerator (3) mit dem Farbbildgeber (8) verbunden ist, wobei dem dildsignalgenerator (3) über eine zweite Einblendschaltung (21) der Sollwert des Bleiverbrauches von einer, das Produkt aus gefertigter Kabellänge und Sollwert des Bleiverbrauches je Meter Kabellänge bildenden Recheneinheit (17) als weiteres Signal zugeführt ist, welches an einem weiteren Eingang der Zeitmultiplexschaltung (19) ansteht.

**Claim**

1. A monitoring device for use in a process for the production of lead cables, having ultrasonic probes (1,1',1'',1'') arranged on the periphery of a lead casing in a plane at right angles to the longitudinal extent thereof and connected to assigned inputs of an analysing unit (3, 4), where the inputs are scanned by a time-division multiplex selector switch (4) controlled by the line scan voltage of a colour image generator (8) arranged at the operating position, and the respective voltages at the output of the selector switch (4) assigned to each probe, controls the vertical deflection of the colour image generator (8) and is also fed to the input of a two-level first voltage discriminator (6), whose lower and upper voltage level outputs are connected to control a colour input (7) of the colour image generator (8), characterised in that there are provided measured value generators (15, 13) for the cable length produced and the assigned quantities of lead, that the output of the second measured value generator (15), used for monitoring the cable length produced, is linked with the line sweep voltage in an adding circuit (18) and fed to a time-division multiplex switching circuit (19) as a further signal, and that the first measured value generator (13), used for monitoring the lead supply, is connected to the colour image generator (8) via an image signal generator (3) controlled by a first gate-in circuit (20), the image signal generator (3) being supplied via a second gate-in circuit (21) with the theoretical value oflead consumption from a calculating unit (17), which forms for eath metre of cable lenght a further signal given by the product of the manufactured cable length and the theoretical value of lead consumption, which further signal is applied at a further input of the time-division multiplex circuit (19).

**Revendication**

1. Dispositif de surveillance pour le processus de fabrication de câbles sous gaine de plomb, comprenant des sondes à ultrasons (1, 1', 1'', 1''), disposées la périphérie de la gaine de plomb dans un plan perpendiculaire à son étendue longitudinale, qui sont connectées à des entrées coordonnées d'une unité d'exploitation (3, 4), ces entrées étant échantillonnées en multiplexage dans le temps par un commutateur sélecteur (4) commandé par la tension de balayage des lignes d'un générateur d'image en couleur (8) installé au poste de travail et la tension apparaissant à la sortie du commutateur sélecteur (4), coordonnée chaque fois à la sonde, commandant le balayage vertical du générateur d'image en couleur (8) et étant appliquée en même temps à l'entrée d'un premier discriminateur de tension (6) à deux limites, dont les sorties de tension limite inférieure et de tension limite supérieure sont connectées en vue de la commande à une entrée de commande de couleur (7) du générateur d'image en couleurs (8), caractérisé en ce qu'il comprend des capteurs (15, 13) pour la longueur de câble produite et pour la quantité de plomb coordonnée à cette longueur, que le signal de sortie du second capteur (15), pour la longueur de câble produite, est combiné dans un circuit d'addition (18) avec la tension de balayage des lignes et est appliqué en tant que signal supplémentaire à un circuit de multiplexage dans le temps (19) et que le premier capteur (13), pour la réserve de plomb, est relié à travers un premier circuit de mélange (20) et un générateur de signaux d'image (3) au générateur d'image en couleur (8), le générateur de signaux d'image (3) recevant à travers un second circuit de mélange (21), en tant que signal supplémentaire, la valeur de consigne pour la consommation de plomb d'une unité de calcul (17) qui forme le produit de la longueur de câble produite et de la valeur de consigne de la consommation de plomb par mètre de longueur de câble, signal supplémentaire qui est appliqué à une autre entrée du circuit de multiplexage dans le temps (19).